# EUROPEAN PATENT SPECIFICATION

(11) **EP 1 834 071 B1**
(45) Date of publication and mention of the grant of the patent: **13.03.2013**
(21) Application number: 04822082.6
(22) Date of filing: 01.12.2004
(51) Int. Cl.: F01D 5/02, F02C 3/073, F02K 3/068, F02C 3/08

(54) **INDUCER FOR A FAN BLADE OF A TIP TURBINE ENGINE**
EINLAUFTEIL FÜR EINEN LÜFTERFLÜGEL EINES SPITZENTURBINENMOTORS
INDUCTEUR DE PALE DE VENTILATEUR DE MOTEUR DE TURBINE A PRESSION D'ENTREE

(43) Date of publication of application: 19.09.2007
(73) Proprietor: United Technologies Corporation, Hartford, CT 06101 (US)
(72) Inventor: SUCIU, Gabriel L., Glastonbury, CT 06033 (US); NORDEEN, Craig A., Manchester, CT 06040 (US); MERRY, Brian, Andover, CT 06232 (US)
(74) Representative: Leckey, David Herbert
(86) International application number: PCT/US2004/040102
(87) International publication number: WO 2006/059992

(56) References cited:
- WO-A-2004/011788
- US-A- 3 283 509
- US-A- 3 496 725
- US-A1- 2004 025 490

## Description

### BACKGROUND OF THE INVENTION

The present invention relates to a tip turbine engine, and more particularly to turning an axial airflow to a radial airflow within a relatively compact space of a fan turbine rotor.

An aircraft gas turbine engine of the conventional turbofan type generally includes a forward bypass fan a compressor, a combustor, and an aft turbine all located along a common longitudinal axis. A compressor and a turbine of the engine are interconnected by a shaft. The compressor is rotatably driven to compress air entering the combustor to a relatively high pressure. This pressurized air is then mixed with fuel in a combustor and ignited to form a high energy gas stream. The gas stream flows axially aft to rotatably drive the turbine which rotatably drives the compressor through the shaft. The gas stream is also responsible for rotating the bypass fan. In some instances, there are multiple shafts or spools. In such instances, there is a separate turbine connected to a separate corresponding compressor through each shaft. In most instances, the lowest pressure turbine will drive the bypass fan.

Although highly efficient, conventional turbofan engines operate in an axial flow relationship. The axial flow relationship results in a relatively complicated elongated engine structure of considerable longitudinal length relative to the engine diameter. This elongated shape may complicate or prevent packaging of the engine into particular applications.

A recent development in gas turbine engines is the tip turbine engine. Tip turbine engines locate an axial compressor forward of a bypass fan which includes hollow fan blades that receive airflow from the axial compressor therethrough such that the hollow fan blades operate as a centrifugal compressor. Compressed core airflow from the hollow fan blades is mixed with fuel in an annular combustor and ignited to form a high energy gas stream which drives the turbine integrated onto the tips of the hollow bypass fan blades for rotation therewith as generally disclosed in U.S. Patent Application Publication Nos.: 20030192303**;** 20030192304; and 20040025490.

The tip turbine engine provides a thrust to weight ratio equivalent to conventional turbofan engines of the same class within a package of significantly shorter length.

The tip turbine engine utilizes hollow fan blades as a centrifugal impeller. Axial airflow from an upstream source such as ambient or an axial compressor must be turned into radial airflow for introduction into the hollow fan blades. Turning axial airflow to radial airflow within a relatively compact space of a fan turbine rotor provides an engine design challenge.

Accordingly, it is desirable to provide an inducer for a fan-turbine rotor assembly, which turns axial airflow radially outward into the airflow passage within the core of each fan blade.

A rotor assembly having a fan hub and multiple fan blades each having an airflow passage in communication with the exit of an inducer passage is disclosed in US 2004/025490 A1.

### SUMMARY OF THE INVENTION

The fan-turbine rotor assembly for a tip turbine engine according to the present invention is set forth in claim 1.

The inducer inlet section is canted toward a rotational direction of the fan-turbine rotor assembly such that the inducer inlet section operates as an air scoop during rotation of the fan-turbine rotor assembly to provide separate airflow communication to a core airflow passage within each fan blade.

The inducer inlet section receives airflow in a direction generally parallel to the engine centerline. The inducer passage section turns the airflow radially outward toward the core airflow passage within each fan blade section. Both axial and centrifugal compression of the airflow occurs along the inducer passage section to effectively pump the airflow through the inducer section and into the core airflow passage.

The present invention therefore provides an inducer for a fan-turbine rotor assembly, which turns axial airflow radially outward toward a core airflow passage within each fan blade section.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a partial sectional perspective view of a tip turbine engine;
Figure 2 is a longitudinal sectional view of a tip turbine engine along an engine centerline;
Figure 3 is an exploded view of a fan-turbine rotor assembly;
Figure 4 is an assembled view of a fan-turbine rotor assembly of Figure 3;
Figure 5A is an expanded view of an inducer section;
Figure 5B is an expanded side view of the inducer section of Figure 5A installed in a hub assembly;
Figure 5C is an expanded partial sectional view of the inducer section of Figure 5A installed in the hub assembly;
Figure 6 is an expanded view of another fan-turbine rotor assembly;
Figure 7 is a partial sectional view of the fan-turbine rotor assembly illustrating the airflow passage therein; and
Figure 8 is a sequential radial sectional view of the fan-turbine rotor assembly illustrating the inducer airflow passage therein.

### DETAILED DESCRIPTION OF THE PREFERRED EMBODIMENT

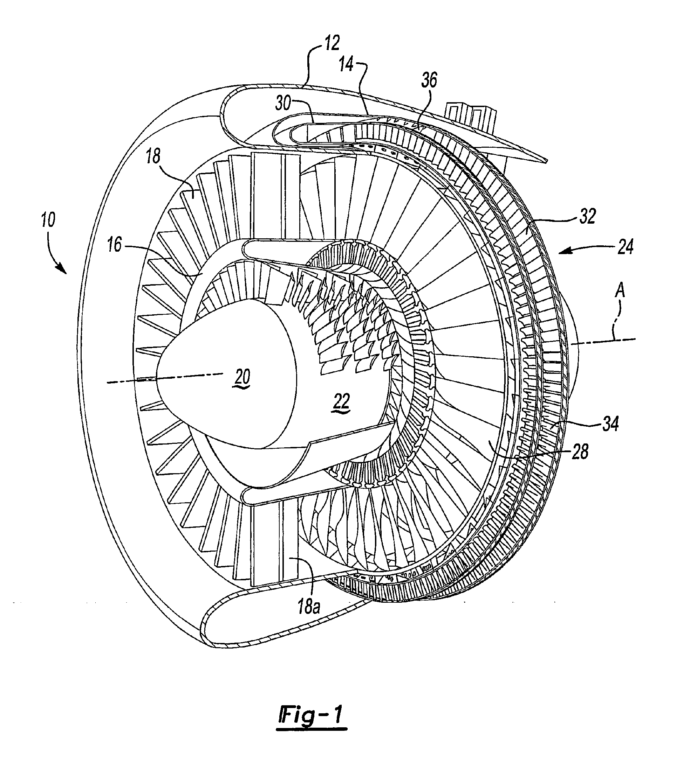

Figure 1 illustrates a general perspective partial sectional view of a tip turbine engine type gas turbine engine 10. The engine 10 includes an outer nacelle 12, a rotationally fixed static outer support structure 14 and a rotationally fixed static inner support structure 16. A multiple of fan inlet guide vanes 18 are mounted between the static outer support structure 14 and the static inner support structure 16. Each inlet guide vane preferably includes a variable trailing edge 18A.

A nose cone 20 is preferably located along the engine centerline A to smoothly direct airflow into an axial compressor 22 adjacent thereto. The axial compressor 22 is mounted about the engine centerline A behind the nose cone 20.

A fan-turbine rotor assembly 24 is mounted for rotation about the engine centerline A aft of the axial compressor 22. The fan-turbine rotor assembly 24 includes a multiple of hollow fan blades 28 to provide internal, centrifugal compression of the compressed airflow from the axial compressor 22 for distribution to an annular combustor 30 located within the rotationally fixed static outer support structure 14.

A turbine 32 includes a multiple of tip turbine blades 34 (two stages shown) which rotatably drive the hollow fan blades 28 relative a multiple of tip turbine stators 36 which extend radially inwardly from the static outer support structure 14. The annular combustor 30 is axially forward of the turbine 32 and communicates with the turbine 32.

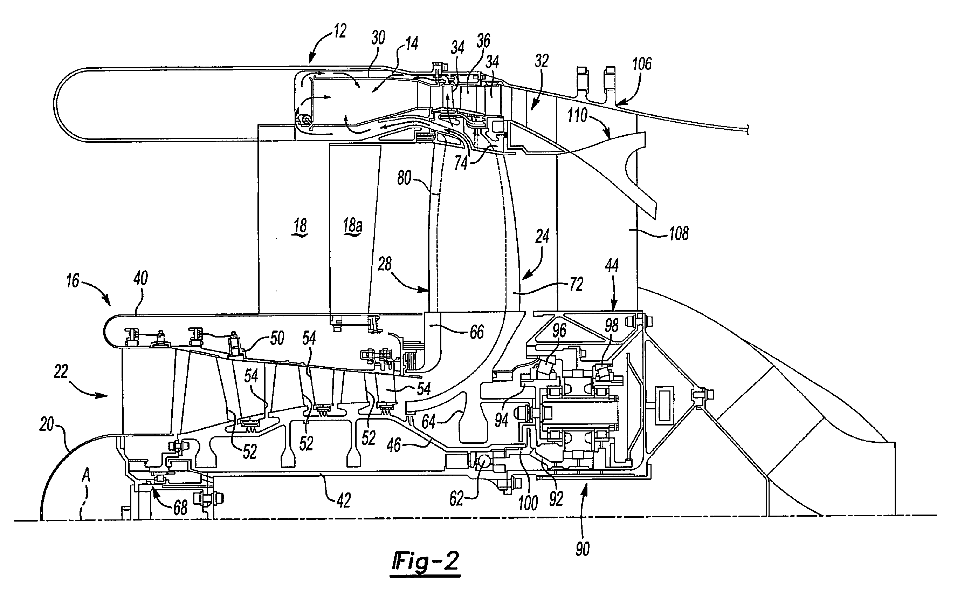

Referring to Figure 2, the rotationally fixed static inner support structure 16 includes a splitter 40, a static inner support housing 42 and an static outer support housing 44 located coaxial to said engine centerline A.

The axial compressor 22 includes the axial compressor rotor 46 from which a plurality of compressor blades 52 extend radially outwardly and a compressor case 50 fixedly mounted to the splitter 40. A plurality of compressor vanes 54 extend radially inwardly from the compressor case 50 between stages of the compressor blades 52. The compressor blades 52 and compressor vanes 54 are arranged circumferentially about the axial compressor rotor 46 in stages (three stages of compressor blades 52 and compressor vanes 54 are shown in this example). The axial compressor rotor 46 is mounted for rotation upon the static inner support housing 42 through a forward bearing assembly 68 and an aft bearing assembly 62.

The fan-turbine rotor assembly 24 includes a fan hub 64 that supports a multiple of the hollow fan blades 28. Each fan blade 28 includes an inducer section 66, a hollow fan blade section 72 and a diffuser section 74. The inducer section 66 receives airflow from the axial compressor 22 generally parallel to the engine centerline A and turns the airflow from an axial airflow direction toward a radial airflow direction. The airflow is radially communicated through a core airflow passage 80 within the fan blade section 72 where the airflow is centrifugally compressed. From the core airflow passage 80, the airflow is turned and diffused toward an axial airflow direction toward the annular combustor 30. Preferably the airflow is diffused axially forward in the engine 10, however, the airflow may alternatively be communicated in another direction.

A gearbox assembly 90 aft of the fan-turbine rotor assembly 24 provides a speed increase between the fan-turbine rotor assembly 24 and the axial compressor 22. Alternatively, the gearbox assembly 90 could provide a speed decrease between the fan-turbine rotor assembly 24 and the axial compressor rotor 46. The gearbox assembly 90 is mounted for rotation between the static inner support housing 42 and the static outer support housing 44. The gearbox assembly 90 includes a sun gear shaft 92 which rotates with the axial compressor 22 and a planet carrier 94 which rotates with the fan-turbine rotor assembly 24 to provide a speed differential therebetween. The gearbox assembly 90 is preferably a planetary gearbox that provides co-rotating or counter-rotating rotational engagement between the fan-turbine rotor assembly 24 and an axial compressor rotor 46. The gearbox assembly 90 is mounted for rotation between the sun gear shaft 92 and the static outer support housing 44 through a forward bearing 96 and a rear bearing 98. The forward bearing 96 and the rear bearing 98 are both tapered roller bearings and both hand radial loads. The forward bearing 96 handles the aft axial loads while the rear bearing 98 handles the forward axial loads. The sun gear shaft 92 is rotationally engaged with the axial compressor rotor 46 at a splined interconnection 100 or the like.

In operation, air enters the axial compressor 22, where it is compressed by the three stages of the compressor blades 52 and compressor vanes 54. The compressed air from the axial compressor 22 enters the inducer section 66 in a direction generally parallel to the engine centerline A and is turned by the inducer section 66 radially outwardly through the core airflow passage 80 of the hollow fan blades 28. The airflow is further compressed centrifugally in the hollow fan blades 28 by rotation of the hollow fan blades 28. From the core airflow passage 80, the airflow is turned and diffused axially forward in the engine 10 into the annular combustor 30. The compressed core airflow from the hollow fan blades 28 is mixed with fuel in the annular combustor 30 and ignited to form a high-energy gas stream. The high-energy gas stream is expanded over the multiple of tip turbine blades 34 mounted about the outer periphery of the fan-turbine rotor assembly 24 to drive the fan-turbine rotor assembly 24, which in turn drives the axial compressor 22 through the gearbox assembly 90. Concurrent therewith, the fan-turbine rotor assembly 24 discharges fan bypass air axially aft to merge with the core airflow from the turbine 32 in an exhaust case 106. A multiple of exit guide vanes 108 are located between the static outer support housing 44 and the rotationally fixed static outer support structure 14 to guide the combined airflow out of the engine 10 to provide forward thrust. An exhaust mixer 110 mixes the airflow from the turbine blades 34 with the bypass airflow through the fan blades 28.

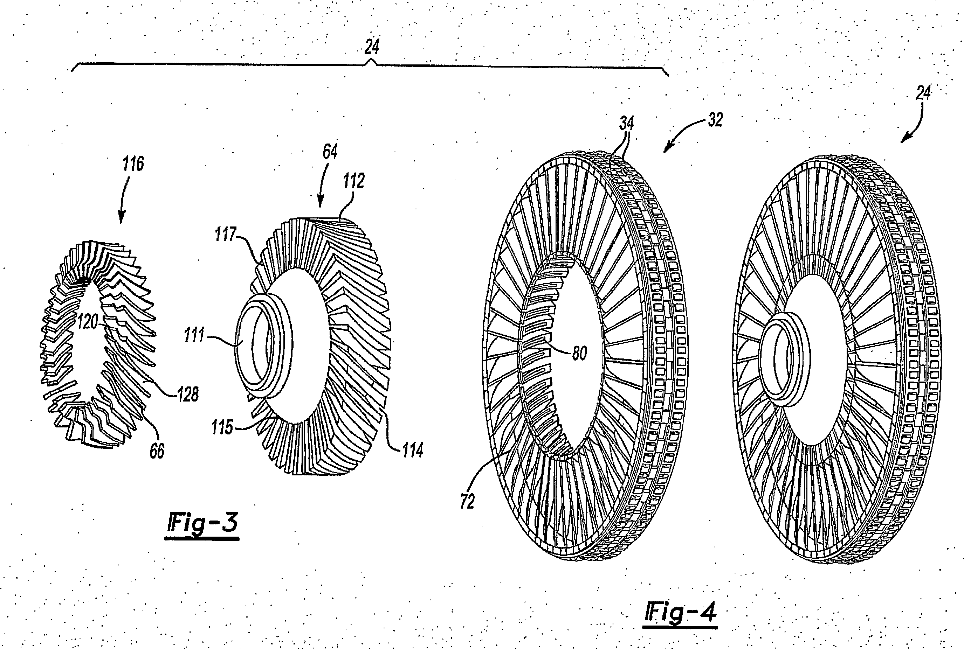

Referring to Figure 3, the fan-turbine rotor assembly 24 is illustrated in an exploded view. The fan hub 64 is the primary structural support of the fan-turbine rotor assembly 24 (Figure 4). The fan hub 64 is preferably forged and milled to provide the desired geometry to receive an inducer 116. The fan hub 64 defines a bore 111 and an outer periphery 112. The outer periphery 112 is preferably scalloped by a multiple of elongated openings 114 located about the outer periphery 112. The elongated openings 114 extend into a fan hub web 115.

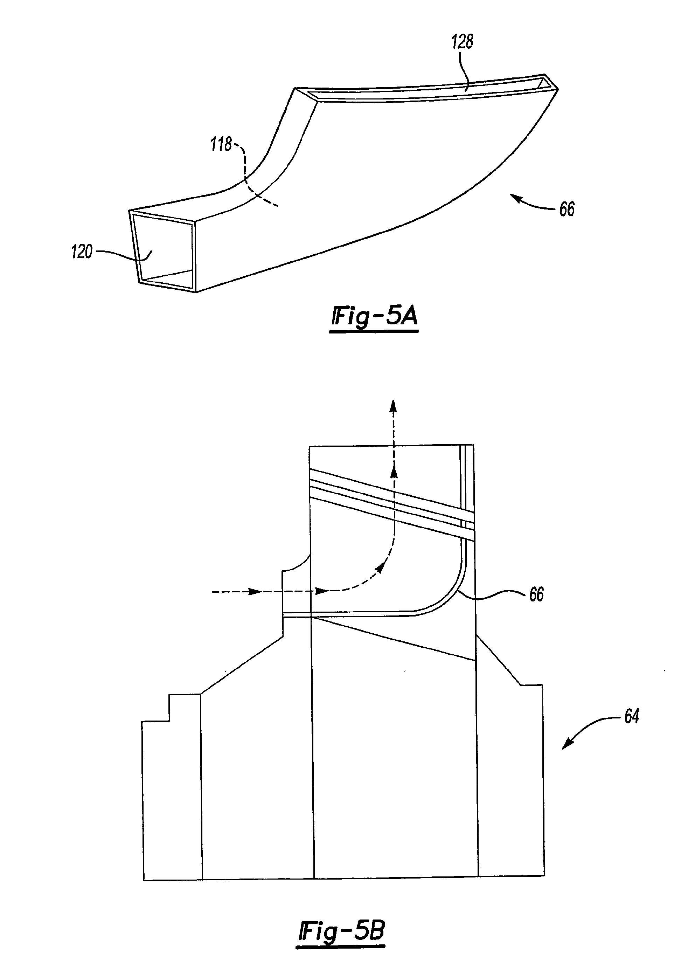

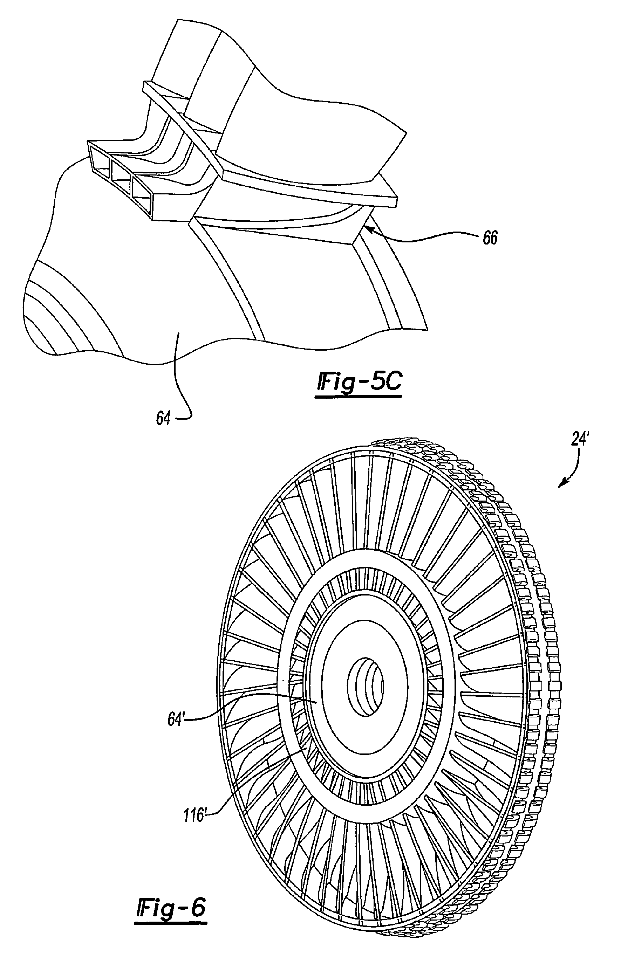

Each elongated opening 114 defines an inducer receipt section 117 to receive each inducer section 66. The inducer receipt section 117 generally follows the shape of the inducer section 66. That is, the inducer receipt section 117 receives the more complicated shape of the inducer section 66 without the necessity of milling the more complicated shape directly into the fan hub 64. The inducer sections 66 are essentially conduits that define an inducer passage 118 between an inducer inlet section 120 and an inducer exit section 128 (also illustrated in Figures 5A, 5B and 5C). Preferably, the inducer sections 66 are formed of a composite material.

Referring to Figure 6, the fan-turbine rotor assembly 24 is alternatively a cast component. It should be understood that although the inducer 116 is illustrated as integral to the fan hub 64', separate individual inducer sections 66 (Figure 5) are individually mounted within the fan hub 64 (Figure 3).

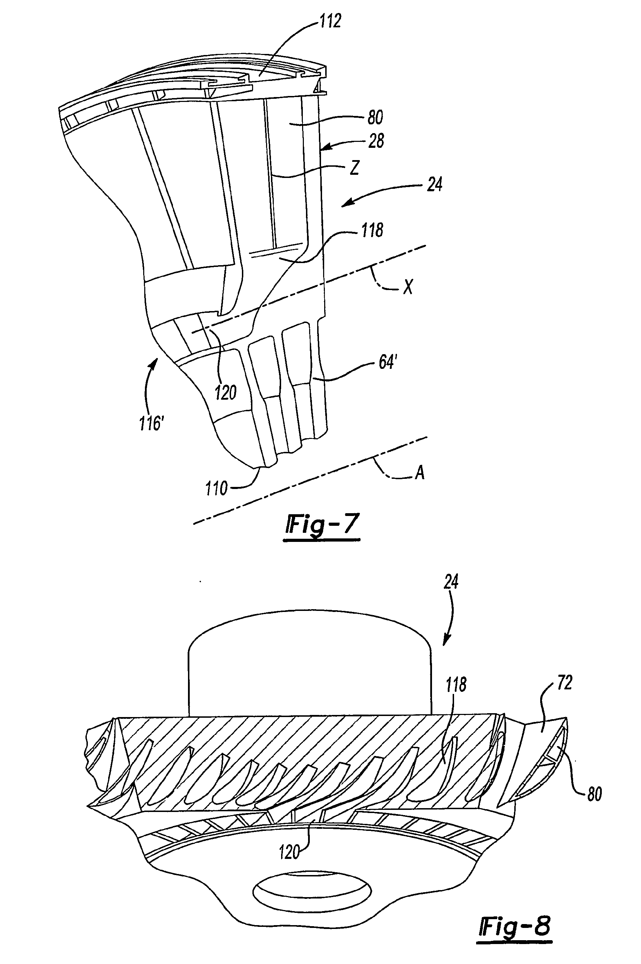

Referring to Figure 7, the inducer inlet section 120 of each inducer passage section 118 is canted toward a rotational direction of the fan hub 64 such that inducer inlet section 120 operates as an air scoop during rotation of the fan-turbine rotor assembly 24. Each inducer passage section 118 provides separate airflow communication to each core airflow passage 80 of each fan blade section 72.

Each inducer inlet section 120 receives airflow in a first direction X generally parallel to the engine centerline A and is turned toward a second direction Z by the inducer passage section 118. The inducer passage section 118 turns the airflow radially outward toward the core airflow passage 80 within each fan blade section 72. Both axial and centrifugal compression of the airflow occurs within the inducer passage section 118 (Figure 8) to effectively pump the airflow through the inducer section 66 and into the core airflow passage 80.

It should be understood that relative positional terms such as "forward," "aft," "upper," "lower," "above," "below," and the like are with reference to the normal operational attitude of the vehicle and should not be considered otherwise limiting.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A fan-turbine rotor assembly (24) for a tip turbine engine comprising:
a fan hub (64) which rotates about a fan hub axis of rotation (A);
a multiple of inducer sections (66) mounted within said fan hub (64), each of said inducer sections (66) defining an airflow passage conduit (118) with an inducer inlet section (120) directed toward a rotational direction of said fan hub (64), each of said airflow passage conduits (118) turning airflow from an axial airflow direction relative to said fan hub axis of rotation (A) to a generally radial airflow direction relative to said fan axis of rotation (A); and
a multiple of fan blades (28) which extend from said fan hub (64), each of said multiple of fan blades (28) defining a fan blade core airflow passage (80) in communication with an inducer exit section (128) of one of said multiple of inducer sections (66).

2. The fan-turbine rotor assembly as recited in claim 1, wherein said multiple of inducer sections are manufactured of a composite material.

3. The fan-turbine rotor assembly as recited in claim 1 or 2, wherein said fan hub defines a multiple of elongated openings (114) about its periphery which define a multiple of inducer receipt sections (117) to receive said multiple of inducer sections.

4. A tip turbine engine (10) comprising an axial compressor (22) and a fan-turbine rotor assembly as recited in any preceding claim, and wherein said fan hub (64) is downstream of said axial compressor (22).

5. The tip turbine engine as recited in claim 4, wherein said axial compressor (22) communicates said airflow into said inducer sections (66).

## Patentansprüche

1. Bläserturbinenrotor-Baueinheit (24) für eine Spitzenturbinenmaschine aufweisend:
eine Bläsernabe (64), die um eine Bläsernabenrotationsachse (A) rotiert;
eine Vielzahl von Einleiterabschnitten (66), die in der Bläsernabe (64) montiert sind, wobei jede der Einleiterabschnitte (66) eine Luftstromdurchgangsleitung (118) mit einem Einleitereinlassabschnitt (120), der in Richtung einer Rotationsrichtung der Bläsernabe (64) gerichtet ist, definiert, wobei jede der Luftstromdurchgangsleitungen (118) einen Luftstrom von einer axialen Luftstromrichtung relativ zu der Bläsernabenrotationsachse (A) zu einer im Wesentlichen radialen Luftstromrichtung relativ zu der Bläserrotationsachse (A) wendet; und
eine Vielzahl von Bläserschaufeln (28), die sich von der Bläsernabe (64) erstrecken, wobei jede der Vielzahl von Bläserschaufeln (28) einen Bläserschaufelkernluftstromdurchgang (80) in Kommunikation mit einem Einleiterausgangsabschnitt (128) von einem der Vielzahl von Einleiterabschnitten (66) definiert.

2. Bläserturbinenrotor-Baueinheit gemäß Anspruch 1, wobei die Vielzahl von Einleiterabschnitten aus einem Verbundmaterial hergestellt sind.

3. Bläserturbinenrotor-Baueinheit gemäß einem der Ansprüche 1 oder 2, wobei die Bläsernabe eine Vielzahl von länglichen Öffnungen (114) um ihre Peripherie definiert, die eine Vielzahl von Einleiteraufnahmeabschnitten (117) definieren, um die Vielzahl von Einleiterabschnitten aufzunehmen.

4. Spitzenturbinenmaschine (10), aufweisend einen axialen Kompressor (22) und eine Bläserturbinenrotor-Baueinheit gemäß einem der vorhergehenden Ansprüche, und wobei die Bläsernabe (64) sich stromabwärts von dem axialen Kompressor (22) befindet.

5. Spitzenturbinenmaschine gemäß Anspruch 4, wobei der axiale Kompressor (22) den Luftstrom in die Einleiterabschnitte (66) kommuniziert.

## Revendications

1. Ensemble de rotor (24) de soufflante-turbine pour un moteur à turbine en bout, comprenant :
un moyeu de soufflante (64) qui tourne autour d'un axe de rotation (A) de moyeu de soufflante ;
une pluralité de sections d'inducteur (66) montées à l'intérieur dudit moyeu de soufflante (64),
chacune desdites sections d'inducteur (66) définissant un conduit de passage d'écoulement d'air (118) doté d'une section d'entrée d'inducteur (120) dirigée en direction d'un sens de rotation dudit moyeu de soufflante (64), chacun desdits conduits de passage d'écoulement d'air (118) déviant l'écoulement d'air d'une direction d'écoulement d'air axiale par rapport audit axe de rotation (A) de moyeu de soufflante à une direction d'écoulement d'air généralement radiale par rapport audit axe de rotation (A) de soufflante ; et
une pluralité d'aubes de soufflante (28) qui s'étendent à partir dudit moyeu de soufflante (64), chacune parmi ladite pluralité d'aubes de soufflante (28) définissant un passage d'écoulement d'air central (80) d'aube de soufflante en communication avec une section de sortie d'inducteur (128) de l'une parmi ladite pluralité de sections d'inducteur (66).

2. Ensemble de rotor de soufflante-turbine selon la revendication 1, dans lequel ladite pluralité de sections d'inducteur sont fabriquées en un matériau composite.

3. Ensemble de rotor de soufflante-turbine selon la revendication 1 ou 2, dans lequel ledit moyeu de soufflante définit une pluralité d'ouvertures allongées (114) autour de sa périphérie qui définissent une pluralité de sections de réception d'inducteur (117) pour recevoir ladite pluralité de sections d'inducteur.

4. Moteur à turbine en bout (10) comprenant un compresseur axial (22) et un ensemble de rotor de soufflante-turbine selon l'une quelconque des revendications précédentes, et dans lequel ledit moyeu de soufflante (64) est en aval dudit compresseur axial (22).

5. Moteur à turbine en bout selon la revendication 4, dans lequel ledit compresseur axial (22) communique ledit écoulement d'air dans lesdites sections d'inducteur (66).
